# EUROPEAN PATENT APPLICATION

(11) **EP 2 040 136 A1**
(43) Date of publication of application: **25.03.2009**
(21) Application number: 07117029.4
(22) Date of filing: 24.09.2007
(51) Int. Cl.: G05B 19/418, G01N 1/20

(54) **Temperature regulating device and method**

(71) Applicant: FOSS Analytical AB, 263 21 Höganäs (SE)
(72) Inventor: Wihlborg, Nils, 252 38 Helsingborg (SE)
(74) Representative: Hilton, Charles Paul

(57) **Abstract**

The invention relates to a temperature regulating device for a liquid flow towards an analysis instrument (6). The device comprises a flow conduit (2) arranged to guide the liquid in a flow direction when the device is in use, a temperature regulating member (4), at least one temperature sensor (7,8,9) and a valve (5). The temperature regulating member (4) is arranged for temperature regulating liquid flowing through the flow conduit (2) for reaching a predetermined temperature range. The valve (5) is connected to the flow conduit (2) and is switchable between at least first and second positions, wherein said valve (5) is arranged to direct the liquid to an analysis instrument (6) only when the valve (5) is in the first position. The at least one temperature sensor (7,8) is arranged for detecting a temperature of the liquid, and the valve (5) is arranged to be switched to the first position in response to the detected temperature being within the predetermined temperature range.

## Description

The present invention relates to a temperature regulating device for a liquid flow of an analysis instrument.

For analysis of liquids, such as measurement of physical or chemical properties of liquids, a constant or specific temperature of the liquid is often desired to obtain accurate analytical results. Therefore, the sample may have to be injected into the, often tempered, analysis instruments followed by a waiting period for the sample to reach a desired and stable temperature. The waiting period for stabilising the temperature may be considerable, resulting in long total analysis times for each sample, even in the cases where the actual analysis is rapid.

US 4,566,312, by Collins et al., discloses an apparatus and process for detection of the fat contents of foods. The apparatus comprises means for automatic measurement of the density of the foods. The density is determined by electromagnetically excited vibrations of a sample-filled U-tube at a natural frequency and detecting the difference in frequency between a sample and a control. The apparatus in the disclosed document comprises a density measurement apparatus with a temperature controller acting to control the temperature of a heat transfer liquid in a well that contains many containers, which in turn each contain a sample to be analysed. Prior to being inserted into the temperature regulated density measuring apparatus, the temperature of the samples is also regulated. The temperature regulated sample is transferred from the container to a line leading to a U-tube, via a syringe. The U-tube is vibrated, data is collected and processed and the density of the sample is determined.

The sample, according to US 4,566,312, needs to be treated in a complicated batch manner. First the sample will have to be transferred to the container and then the container, after temperature regulation, will have to be transferred from the temperature controller to the density measurement apparatus. Such a process is complex and may be time-consuming independent of whether it is performed manually or automatically.

Furthermore, the temperature regulation of the samples, according to US 4,566,312 is preceded by regulation of the heat transfer liquid inside the well, which may be a time-consuming process due to the often considerable liquid volume. Particularly during consecutive analysis of different samples at different analysis temperatures this may be considerably time consuming.

Further adding to the disadvantages of apparatus according to the disclosed document are the normally rather large sample volumes that are loaded into the containers. Such large volumes result in slower temperature regulation of the sample and the risk of having sample zones in the container that are not correctly regulated (such as in the centre of the container), particularly if highly viscous or poorly heat transferring liquids are analysed.

Thus there is a need for a sample pre-treatment apparatus and method that allow for rapid and uncomplicated temperature regulation of samples to be analysed.

An objective of the present invention is to facilitate rapid temperature regulation of liquid samples to be analysed.

Another objective of the present invention is to facilitate high accuracy temperature regulation of liquid samples to be analysed.

The above objectives are achieved according to the present invention by means of a device, a system and a method in accordance with the appended independent claims. Preferred embodiments are disclosed in accordance with the dependent claims.

Thus there is provided, according to one aspect of the present invention, a temperature regulating device for a liquid flow. The device comprises a conduit arranged to guide the liquid in a flow direction when the device is in use, a temperature regulating member, at least one temperature sensor and a valve. The temperature regulating member is arranged for temperature regulating liquid flowing through the flow conduit for reaching a predetermined temperature range when the device is in use. The valve is connected to the conduit and has first and second positions, wherein said valve is arranged to direct the liquid to an analysis instrument, such as a densitometer, when the valve is in the first position. The at least one temperature sensor is arranged for detecting a temperature of the liquid, and the valve is arranged to be switched to the first position in response to the detected temperature being within the predetermined temperature range.

The flow conduit may be any kind of flow conduit, such as flexible flow conduit of e.g. a plastic material, or non-flexible flow conduit of e.g. a metal or a ceramic material. The flow conduit is arranged to allow liquid to flow through it, thus enabling a liquid to flow in a flow direction along the length of the flow conduit.

The temperature regulating member, according to the invention, may provide either heating or cooling, or preferably both, of the liquid flow. Depending on whether said flow is below or above the desired temperature range the temperature regulating member may heat or cool the flow respectively. The temperature regulating member is arranged so that it may temper a liquid flowing through a tube, which enables continuous tempering of a flow that may be continuously flowing towards an analytical instrument. The temperature regulating member may e.g. be completely or partly arranged within the flow conduit, or arranged around the flow conduit, heat exchanging through the flow conduit wall.

The at least one temperature sensor of the present invention may be any kind of temperature sensor known in the art which may be useful in detecting the temperature of a liquid flowing through the flow conduit. The sensor is arranged to determine the temperature of the liquid flow. This may be achieved e.g. by arranging the sensor within the flow conduit to measure the temperature directly on the liquid, or by measuring the temperature of the outside wall of the flow conduit, which temperature may be correlated to the temperature of the liquid within the flow conduit, or by arranging the sensor in any other way which may result in an indication of the liquid temperature.

The valve, according to the present invention, has multiple positions and is therefore able to direct the liquid flow in multiple directions. The valve is used to direct the liquid flow to the analysis instrument only when the liquid flow is within the desired temperature range, as detected by a temperature sensor, such as the sensor discussed above. The use of a valve, which is switched to allow a liquid flow to enter an analysis instrument, minimises the risk of contaminating the liquid or the analysis instrument, compared with manually transferring the liquid by means of e.g. a syringe. Also, temperature variations of a temperature regulated liquid during transport to the analysis instrument may be minimised, since the so regulated liquid may be directly introduced into the analysis instrument. This procedure also saves time. The valve should preferably be of such type and so arranged so that it does not heat or cool the liquid flowing to the analysis instrument.

The valve is arranged to be switched to its first position, directing the liquid towards an analysis instrument, in response to the liquid temperature, as detected by the temperature sensor, being within a predetermined temperature range. Thus, the valve is controlled, directly or indirectly, by the sensor output, in such ways that when the liquid flow has reached a certain temperature, the valve switches and directs the liquid flow to the analysis instrument, rather than to, for example, waste.

The inventive device facilitates tempering of a flowing liquid, in a continuous manner, whereby, when the right temperature or temperature range is reached, the flow of liquid may be directed to an analysis instrument, such as a densitometer. This eliminates handling of distinct volumes or portions of the liquid of sample. It also makes the temperature regulation less complicated and less time-consuming, and facilitates the transportation of the liquid to the analysis instrument.

The temperature range may be the predetermined temperature ± 1°C, but preferably the predetermined temperature ± 0.1°C, and more preferably the predetermined temperature ± 0.01°C. A higher accuracy of the obtained temperature of the liquid flow may ad to the accuracy of the analysis, e.g. for a density analysis which may be highly temperature sensitive, but the more accurate tempering may take longer time to achieve.

Preferably, the output from the at least one temperature sensor may also be used to control the temperature regulating member. Thus, the sensor may provide information for optimal operation of the temperature regulating member for reaching the desired liquid temperature.

The temperature regulating device may preferably be arranged so that the valve is positioned, seen in the flow direction, downstream the at least one temperature sensor which in turn is arranged downstream the temperature regulating member. This enables direct detection of the temperature of the liquid flow reaching the valve, which facilitates determining when to, based on the temperature detected by the sensor, switch the valve to allow the liquid to reach the analysis instrument.

The at least one temperature sensor being arranged between the temperature regulating member and the valve also enables the output of the temperature sensor to facilitate control of the temperature regulating member through a feed-back process, where, e.g., a too low liquid temperature detected by the temperature sensor may result in the temperature regulating member being set to increased heating, or decreased cooling. This process may also be iterative.

The temperature regulating device may comprise a second temperature sensor arranged to detect a temperature of the liquid. This second temperature sensor may be used to facilitate control of the temperature regulating member, such that the temperature regulating member is arranged to be controlled depending of the output from said second temperature sensor. This second temperature sensor may be arranged inside or outside the flow conduit wall in analogy with the discussion above regarding the at least one temperature sensor.

Preferably, the second temperature sensor is arranged, seen in the flow direction, upstream of the temperature regulating member, which enables detection of the temperature of the liquid flow reaching the temperature regulating member. The temperature regulating member may thus be controlled or regulated in accordance with the temperature of the liquid reaching it. The temperature regulating member may be controlled on the basis of both the temperature detected by the at least one temperature sensor, possibly downstream of the temperature regulating member, and the temperature detected by the second temperature sensor, possibly upstream of the temperature regulating member, enabling more precise control of the temperature regulating member than if only one temperature sensor is used for its control.

One or more temperature sensors may be arranged at the point where the temperature regulating member interacts with the flow conduit. As discussed above in respect of temperature sensors, the temperature sensors may be arranged either inside the flow conduit that guides the liquid flow or on the outside of the flow conduit, either at a distance of the flow conduit or in contact with the flow conduit.

Further, the temperature regulating device may comprise a temperature sensor arranged to detect the temperature of the temperature regulating member, for more efficient and precise control of the member and of the temperature regulation performed by said member, and for better monitoring of the device as a whole.

The temperature regulating device of the present invention may further comprise a pump connected to the flow conduit. This pump facilitates the creation of the flow of the liquid through the flow conduit.

The pump preferably provides a constant volumetric flow rate. This constant flow rate simplifies the temperature regulation of the flowing liquid, and makes it more precise. By providing a constant flow, it is easier to control or regulate the temperature regulating member such that a desired temperature of the flow of the liquid is achieved. Also, if a temperature sensor upstream of the member is used, a constant flow, in combination with the output of said sensor, facilitate predicting how to control the member in order to achieve a desired temperature of the liquid flow downstream of the member. Further, a constant flow ensures that the temperature of the liquid flow downstream of the temperature regulating member may be kept constant during constant action (level of heating or cooling) of the temperature regulating member.

The pump, according to the present invention, may for example be a peristaltic pump, a pump of the HPLC-type, or a syringe pump. Instead of using a pump, a pressure applied to at least one end of the flow conduit or a pressure difference over the flow conduit may be used to obtain a flow through the flow conduit. The pressure difference may for example be obtained by siphoning, from gravity, from centrifugal forces, from applied gas-pressures, or from applied vacuum. Any means for creating the liquid flow through the flow conduit may be useful.

The temperature regulating device according the invention may be operated manually by an operator who obtains the temperature(s) detected by the temperature sensor or sensors. The operator may control the temperature regulating member, based on the obtained temperature(s), and when the temperature of the liquid flow is within a predetermined range, the operator switches the valve to direct the liquid flow to the analysis instrument.

The temperature regulating device may alternatively be operated in a semi-manual mode, whereby the valve is switched manually by an operator while the temperature regulating member is controlled by an automatic control unit. Alternatively, the valve is controlled automatically and the temperature regulating member is controlled manually by an operator. The possibility to operate the temperature regulating device, according to the invention, either manually or automatically, or by combinations thereof, makes the invention versatile and easy to adapt to different temperature regulation needs. For low sample through-puts, a manual or semi-manual approach might be the best solution.

The temperature regulating device of the present invention preferably comprises a control unit for control of the valve positions and/or the temperature regulating member. Such a unit may be used for switching the valve to its first position, directing the liquid flow towards the analysis instrument when the temperature of the liquid is within the preset temperature range. The control unit may get input from the at least one temperature sensor, and/or possibly any other temperature sensors in association with the inventive device, and may control the valve and/or the temperature regulating member based on this input. The control unit is preferably an automatic control unit, preferably comprising a microcomputer.

The control unit of the inventive device preferably comprises a PID-regulator for efficient and precise control of the temperature regulating member, leading to efficient and precise regulation of the temperature of the liquid flow.

The temperature regulating member of the temperature regulating device may be any type able to heat and/or cool the liquid flowing through the flow conduit, but preferably the member comprises a Peltier arrangement. Such an arrangement is an efficient means of cooling as well as heating the liquid flow. Also, such an arrangement is devoid of moving parts, improving operation reliability and reducing the need for maintenance.

When the valve is not directing the liquid to the analysis instrument, the liquid may be directed to waste, or the liquid flow may be re-circulated or fed back to the container or flow conduit it originated from. When the liquid sample to be analysed is present in abundance, it is often preferable to direct the liquid to waste when it is not directed to the analysis instrument, since this is often the simplest solution. However, if the liquid is scarce or valuable, it may be preferable or even necessary, to recirculate it in some standard fashion.

The inventive temperature regulating device is of particular use in density measurements, as the density of a liquid is temperature dependent and will thus vary with changes in temperature. The density of a liquid may preferably be obtained from measurements performed at a liquid temperature of between 0 and 50°C, such as at between 10 and 30°C, and more specifically at about 20°C. Preferably, not just the liquid flow to be analysed should be temperature regulated, but also the actual analysis instrument, or at least the sensor in the analysis instrument, and flow conduit and arrangements guiding the liquid flow to the analysis instrument should preferable be temperature regulated.

According to another aspect of the present invention there is provided a system comprising a temperature regulating device, as discussed above, and a densitometer.

The densitometer of the system enables the density of the temperature regulated liquid flow to be determined.

According to yet an other aspect of the present invention there is provided a method for temperature regulating a liquid flow, said method comprising: temperature regulating a liquid, flowing through a flow conduit with a volumetric flow rate, using a temperature regulating member for reaching a predetermined temperature range; detecting a temperature of said liquid, using at least one temperature sensor; and directing the liquid flowing through the flow conduit to an analysis instrument by means of a valve in response to the detected temperature being within the predetermined temperature range.

The method according to the present invention preferably further comprises automatically controlling the temperature regulating member by means of a control unit, based on the temperature detected by the at least one temperature sensor and/or by a second temperature sensor and/or on a temperature detected by a temperature sensor arranged to measure the temperature of the temperature regulating member.

The discussion above in respect of the device is, where applicable, also relevant in respect of the system and the method. Reference is made to that discussion.

Exemplary embodiments of a device and system according to the present invention will be disclosed in more detail with reference to the drawings of the accompanying figures, of which:

Fig. 1 is a schematic representation of a system according to the invention;

Fig. 2 is a schematic representation of a measurement portion of a densitometer usable as the analysis instrument of the system of Fig.; and

Fig. 3 is a schematic representation of an arrangement usable for regulating temperature of liquid in a system according to the present invention.

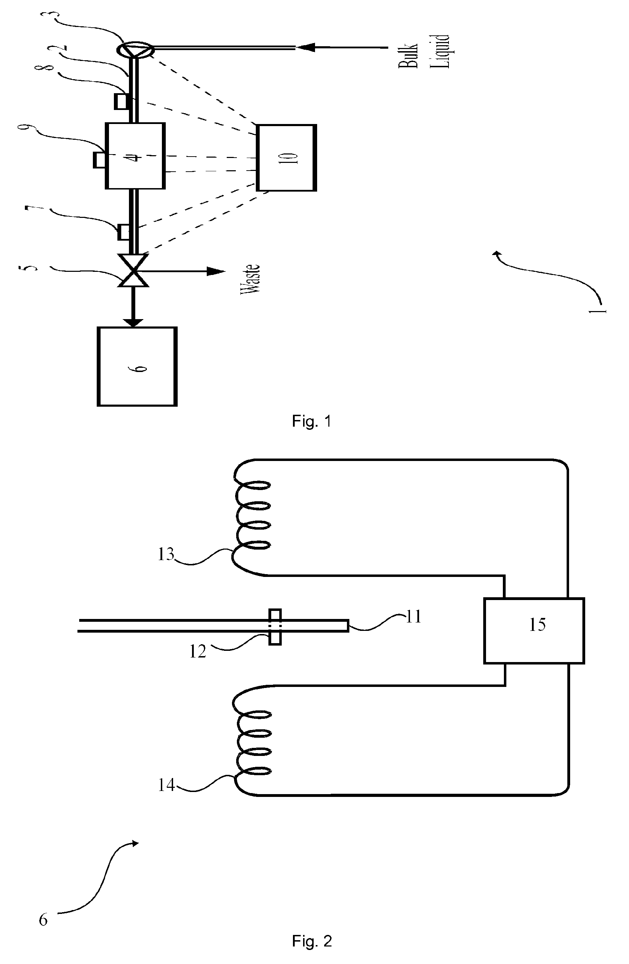

A specific embodiment of the present invention will now be discussed with reference to Fig. 1.

A system 1 for analysis of a temperature regulated liquid, such as an aqueous solution or an oil, comprises a flow conduit 2 arranged to guide a liquid flowing through it. The flow conduit 2 is in flow connection to a pump 3 arranged to pump the liquid through the flow conduit 2 at a constant volumetric flow rate. This is advantageous since the amount of liquid in a given length of conduit to be temperature regulated will be constant throughout an analysis. A temperature regulating member 4 is arranged at the flow conduit 2, after the pump 3 seen in the flow direction of the liquid, for regulating the temperature of the liquid flowing through said flow conduit 2. A valve 5 is connected to the other end of the flow conduit 2, the valve 5 being arranged to direct the liquid flow, after being temperature regulated by the temperature regulating member 4, either to an analysis instrument 6, such as a densitometer, or to waste.

This specific preferred embodiment of the present invention comprises three temperature sensors. One temperature sensor 7 is arranged at the flow conduit between the temperature regulating member 4 and the valve 5 for detecting the temperature of the liquid after being temperature regulated by the temperature regulating member 4. Another temperature sensor 8 is arranged at the flow conduit between the pump 3 and the temperature regulating member 4, for measuring the temperature of the liquid prior to being affected by the temperature regulating member 4. Finally, a temperature sensor 9 is arranged to measure a temperature of the temperature regulating member 4.

A control unit 10 is arranged to receive temperature information from the three different temperature sensors 7, 8 and 9, and to, based on this temperature information, control the temperature regulating member 4 and the valve 5. The temperature regulating member 4 is controlled such that the liquid temperature detected by the temperature sensor 7 reaches a preset value. When this value is reached the valve 5 is controlled such that it directs the liquid, now at the preset temperature, to the analysis instrument 6 instead of to waste. Also, the control unit 10 may be in communication with the pump 3 for additional system control.

The pump 3 may be any type of pump capable of providing a constant liquid flow rate, but a peristaltic pump is preferred in this specific embodiment. The position of the pump 3 along the flow conduit is not critical as long as the constant flow rate is provided, but it is often convenient to place it prior, in the flow direction, to the temperature regulating member 4 and the temperature sensor 8, in order to avoid the pump 3 interfering with the liquid, and the temperature of said liquid, as it is being regulated.

Also, the temperature regulating member 4 may be any type capable of regulating the temperature of the liquid flowing through the flow conduit 2, but a member 4 comprising a Peltier arrangement is preferred in this specific embodi-ment.

The flow conduit 2 may be made of any convenient material, such as glass, metal or a plastic material. A plastic material may be preferred if the pump 3 is a peristaltic pump, but a metal, or other material good at transferring heat, may be preferred for effective heat transfer at the temperature regulating member if e.g. a Peltier arrangement is used. It may thus be convenient to utilize different materials of different portions of the flow conduit 2. It may also be convenient to heat insulate a portion of the flow conduit 2, such as between the temperature regulating member 4 and the analysis instrument 6 in order to avoid temperature changes of the temperature regulated liquid before analysis.

The control unit 10 preferably comprises a regulator of the known PID type for automatic control of the temperature regulating device. The unit 10 is arranged to, based on input from the three different temperature sensors 7-9, regulate the temperature regulating member 4 as efficiently as possible in order to quickly arrive at the preset desired temperature value at the temperature sensor 7, and to keep the temperature at this sensor 7 constant. When this is achieved, the control unit 10 sends a signal to the valve 5 such that the valve 5 discontinues directing the liquid flow to waste and instead directs the liquid flow to the analysis instrument 6.

The analysis instrument 6 may be a densitometer. By densitometer, a device for obtaining the density of the liquid being analysed is referred to. The density may be expressed for example in grams per cubic centimetre, kilograms per litre, ounces per cubic inch, or any other unit of mass expressed per unit of volume, or any other ratio or relation between a mass and a volume. The density may also be recalculated to express a number of particles in relation to a volume, for example a number of atoms, molecules, or droplets per volume.

Referring now to Fig. 2, the densitometer 6 may be of the type utilising an oscillating U-tube 11. Such a densitometer 6 is of generally known construction and comprises a U-tube 11 for containing a liquid to be analysed and an oscillating means 12, 13, 14, 15. The oscillating means illustrated in Fig.1 is well known in the art and incorporates a permanent bar-magnet 12 which, at least in use, is located between two opposing coils 13, 14 which are electrically connected through an excitation driver unit 15.

The resonance frequency of the U-tube 11 will vary at constant amplitude depending on the mass of the liquid in the U-tube 11, and thus the resonance frequency will be dependent on the density of the liquid in the U-tube 11.

The U-tube 11 may be of glass, but also a metal U-tube may be used. A metal tube is easier to manufacture, it may for example be made by bending a metal tube having correct dimensions, and it is cheaper. Preferably the metal is titanium, which properties allows for cleaning at harsh conditions, such as during the use of acids or bases, or other cleaning liquids, which might etch a glass U-tube 11 . The metal is also preferably a light metal, such as titanium, since the difference in liquid density will be more difficult to detect if the weight ratio between the tube and the tube filled with liquid is small.

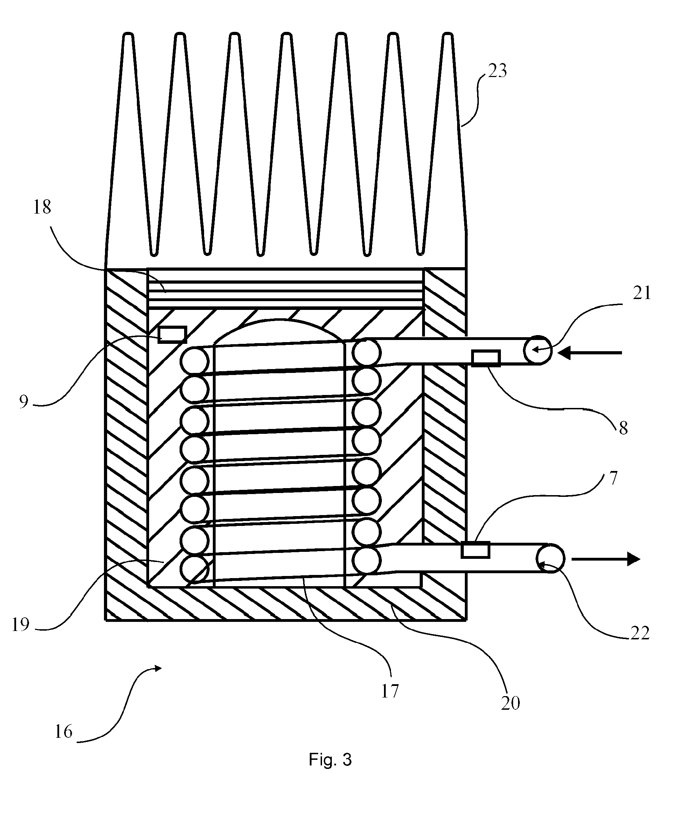

Considering now Fig. 3, an exemplary arrangement 16 is illustrated which is usable as the temperature regulating member 4 of the system according to Fig. 1. Elements common to the two figures are given the same reference numerals in both figures.

The arrangement 16 comprises a flow conduit 17 of thermally conducting material located in good thermal contact with a temperature regulating element 18, such as a Peltier element 18. In the present example the flow conduit 17 is in thermal contact with an aluminium block 19 or other suitable thermally conducting element and is formed as a coil to increase the thermal contact region with the block 19. The aluminium block 19 is itself in thermal contact with the Peltier element 18 so that heat may be efficiently transferred between liquid flowing in the flow conduit 17 and the Peltier element 18. Preferably a thermally insulating material 20 is provided to reduce unwanted thermal transfer between the surroundings and the block 19 and conduit 17.

The temperature sensor 8 is located proximal an inlet 21 of the flow conduit 17 and the temperature sensor 7 is located proximal an outlet 22 of the flow conduit 17, so as to each measure the temperature of liquid flowing through the conduit 17. The temperature sensor 9 may be conveniently located in the thermally conductive block 19, proximal the Peltier element 18. Usefully, a heat-sink 23 may be connected to the Peltier element 18 which helps improve its efficiency. It will be appreciated by the skilled person that the flow conduit 17 may replace some or the entire conduit 2 of the system according to Fig. 1. Thus one or both the pump 3 and the valve 5 may be connected directly to respectively the inlet 21 and the outlet 22.

## Claims

1. A temperature regulating device for a liquid flow towards an analysis instrument (6), said device comprising a flow conduit (2;17) arranged to guide the liquid in a flow direction when the device is in use, a temperature regulating member (4), at least one temperature sensor (7) and a valve (5), said temperature regulating member (4) being arranged for temperature regulating liquid flowing through the flow conduit (2;17), said valve (5) being connected to said flow conduit (2;17) and being switchable between a first position, at which liquid in the conduit is directed towards the analysis instrument (6) and a second position, at which liquid in the conduit is directed away from the analysis instrument (6), wherein said at least one temperature sensor (7) is arranged for detecting a temperature of the liquid and wherein the valve (5) is arranged to be switched to the first position in response to the detected temperature being within a predetermined temperature range.

2. The temperature regulating device according to claim 1, wherein the temperature regulating member (4) is arranged to be controlled in accordance with the temperature detected by said at least one temperature sensor (7).

3. The temperature regulating device according to any one of the claims 1-2, wherein the valve (5) is disposed, seen in the flow direction, downstream the at least one temperature sensor (7) which in turn is arranged downstream the temperature regulating member (4) to monitor temperature of liquid in the flow conduit (2;17).

4. The temperature regulating device according to any one of the claims 2-3, further comprising a second temperature sensor (8) disposed, seen in the flow direction, upstream of the temperature regulating member (4) and is arranged for detecting a temperature of the liquid, wherein the temperature regulating member (4) is arranged to be controlled also in accordance with a temperature detected by the second temperature sensor (8).

5. The temperature regulating device according to any one of the claims 1-4, further comprising a pump (3) connected to the flow conduit (2;17).

6. The temperature regulating device according to claim 5, wherein the pump (3) is arranged to provide a constant volumetric flow rate through the flow conduit (2; 17).

7. The temperature regulating device according to any one of the claims 1-6, further comprising a control unit (10) for controlling one or both the switching of valve (5) position and the thermal output of the temperature regulating member (4).

8. The temperature regulating device according to any one of the claims 1-7, wherein the valve (5) is arranged to direct the liquid to waste when said valve (5) is in the second position.

9. A system (1) comprising a temperature regulating device according to any one of the claims 1-8, and a densitometer (6).

10. A method of temperature regulating a liquid flow towards an analysis instrument (6) using a temperature regulating device as claimed in any one of the claims 1-8, said method comprising: temperature regulating a liquid flowing through a flow conduit (2;17); attaining a predetermined temperature range using a temperature regulating member (4); detecting a temperature of said liquid, using at least one temperature sensor (7); and selectively directing the liquid flowing through the flow conduit (2;17) towards the analysis instrument (6) by means of a switchable valve (5) in response to the detected temperature being within the predetermined temperature range.

## Amended claims

### Amended claims in accordance with Rule 137(2) EPC.

**1.** A temperature regulating device for a liquid flow towards an analysis instrument (6), said device comprising a flow conduit (2;17) arranged to guide the liquid in a flow direction when the device is in use, a temperature regulating member (4), at least one temperature sensor (7) arranged for detecting a temperature of the liquid and a valve (5) connected to said flow conduit (2;17) to regulate flow there through, said temperature regulating member (4) being arranged for temperature regulating liquid flowing through the flow conduit (2;17) **characterised in that** said valve (5) is switchable between a first position, at which liquid in the conduit is directed towards the analysis instrument (6) and a second position, at which liquid in the conduit is directed away from the analysis instrument (6) wherein the valve (5) is arranged to be switched to the first position in response to the temperature detected by the at least one temperature sensor (7) being within a predetermined temperature range.

**2.** The temperature regulating device according to claim 1, wherein the temperature regulating member (4) is arranged to be controlled in accordance with the temperature detected by said at least one temperature sensor (7).

**3.** The temperature regulating device according to any one of the claims 1-2, wherein the valve (5) is disposed, seen in the flow direction, downstream the at least one temperature sensor (7) which in turn is arranged downstream the temperature regulating member (4) to monitor temperature of liquid in the flow conduit (2;17).

**4.** The temperature regulating device according to any one of the claims 2-3, further comprising a second temperature sensor (8) disposed, seen in the flow direction, upstream of the temperature regulating member (4) and is arranged for detecting a temperature of the liquid, wherein the temperature regulating member (4) is arranged to be controlled also in accordance with a temperature detected by the second temperature sensor (8).

**5.** The temperature regulating device according to any one of the claims 1-4, further comprising a pump (3) connected to the flow conduit (2;17).

**6.** The temperature regulating device according to claim 5, wherein the pump (3) is arranged to provide a constant volumetric flow rate through the flow conduit (2;17).

**7.** The temperature regulating device according to any one of the claims 1-6, further comprising a control unit (10) for controlling one or both the switching of valve (5) position and the thermal output of the temperature regulating member (4).

**8.** The temperature regulating device according to any one of the claims 1-7, wherein the valve (5) is arranged to direct the liquid to waste when said valve (5) is in the second position.

**9.** A system (1) comprising a temperature regulating device according to any one of the claims 1-8, and a densitometer (6).

**10.** A method of temperature regulating a liquid flow towards an analysis instrument (6) using a temperature regulating device as claimed in any one of the claims 1-8, said method comprising:
temperature regulating a liquid flowing through a flow conduit (2;17);
attaining a predetermined temperature range using a temperature regulating member (4);
detecting a temperature of said liquid, using at least one temperature sensor (7); and
selectively directing the liquid flowing through the flow conduit (2;17) towards the analysis instrument (6) by means of a switchable valve (5) in response to the detected temperature being within the predetermined temperature range.
